# EUROPÄISCHE PATENTANMELDUNG

(11) **EP 4 836 232 A1**
(43) Veröffentlichungstag der Anmeldung: **04.11.2026**
(21) Anmeldenummer: 25173522.1
(22) Anmeldetag: 30.04.2025
(51) Int. Cl.: H02J 13/00, H04L 41/0806

(54) **VERFAHREN ZUR INBETRIEBNAHME EINES INTELLIGENTEN ELEKTRISCHEN GERÄTS DER SCHUTZ- UND AUTOMATISIERUNGSTECHNIK**

(71) Anmelder: Siemens Aktiengesellschaft, 80333 München (DE)
(72) Erfinder: Hahn, Stefan, 12439 Berlin (DE); Reis, Matthias, 10245 Berlin (DE); Sommer, Dirk, 13053 Berlin (DE)
(74) Vertreter: Siemens Patent Attorneys

(57) **Zusammenfassung**

Die Erfindung betrifft ein Verfahren zur Inbetriebnahme eines intelligenten elektrischen Geräts (IED) zum Schutz von Komponenten eines Umspannwerks oder zur Automatisierung von Abläufen in dem Umspannwerk, bei dem auf einem Konfigurationsgerät (1) die Struktur eines elektrischen Energieversorgungsnetzes des Umspannwerks in Gestalt eines Single Line Diagramms (SLD) (3) angezeigt wird, wobei die Position des zu installierenden IEDs in dem SLD (3) mittels eines Platzhalters (4) verdeutlicht wird, durch Interagieren mit dem Platzhalter (4) ein Code-Scanner eingeschaltet wird; ein das zu installierende Gerät eindeutig identifizierender Code mittels des Code-Scanners gescannt wird, woran anschließend das zu installierende IED eine IP-Adresse erhält und in ein Kommunikationsnetz des Umspannwerks eingegliedert wird.

## Beschreibung

Die Erfindung betrifft ein Verfahren zur Inbetriebnahme eines intelligenten elektrischen Geräts (IED) zum Schutz von Komponenten eines Umspannwerks oder zur Automatisierung von Abläufen in dem Umspannwerk.

IEDs dieser Art sind beispielsweise Schutzgeräte, die beispielsweise Abgänge in einem Umspannwerk auf das Vorliegen eines Fehlers hin überwachen. Wird ein solcher Fehler festgestellt, erzeugt das Schutzgerät ein Fehlersignal, woraufhin in der Regel ein Schalter, beispielsweise ein Leistungsschalter, von seiner Kontaktstellung, in dem ein Stromfluss über den Schalter ermöglicht ist, in seine Trennungsstellung überführt wird, in welcher der besagte Stromfluss unterbrochen ist. Solche IEDs können aber auch Automatisierungsgeräte sein, die beispielsweise in Umspannwerken eingesetzt werden, um z.B. einen Schalter zu betätigen.

Es ist üblich, IEDs der oben genannten Art auszuliefern, ohne dass herstellerseitig eine Parametrierung des IEDs erfolgt ist. Zu den vom Hersteller des IEDs vorgenommenen Einstellungen gehört lediglich das Einstellen einer IP-Adresse.

Bei der Inbetriebnahme einer neuen Anlage oder beim Austausch eines defekten Schutzgerätes besteht die Notwendigkeit, ein IED physisch einem Abgang oder einer zu schützenden Komponente des Umspannwerks zuzuordnen. Eine solche Komponente kann beispielsweise ein Transformator sein. Hierzu wird in der Regel ein sogenanntes Single Line Diagramm (SLD) auf einem Konfigurationsgerät erzeugt. Bei einem SLD werden beispielsweise dreiphasige Leiter als einphasige Leiter (single line) dargestellt. Das Single-Line-Diagram ist gewissermaßen ein Schaltplan der Unterstation oder des Umspannwerks und liegt in der Regel zusammen mit der Schutzparametrierung in einer Engineering-Software vor.

Neue IEDs werden üblicherweise dem vorliegenden SLD zugeordnet. Die Zuordnung von physischem IED und Single-Line-Diagramm-Element legt fest, welches physische IED des Umspannwerks welche Funktion übernimmt. Eine Funktion dieser Art ist beispielsweise der Differentialschutz eine Transformators.

Das IED wird in ein Kommunikationsnetz des Umspannwerks z.B. LAN integriert. Daher besteht die Notwendigkeit, eine Netzwerkkonfiguration vorzunehmen und dem IED statt der werksseitigen IP-Adresse (z.B. 169.254.100.1) eine eindeutige, keinem anderen IED im Netzwerk zugeordnete Adresse zuzuordnen. Erst nach diesem Schritt kann das konfigurierte IED in das Kommunikationsnetzwerk der Anlage integriert werden, da es sonst zu IP-Adresskonflikten kommen würde.

Es ist bekannt ein zu installierendes IED über ein USB-Kabel mit einem Einzelplatzrechner (PC) zu verbinden, der über eine Engineering-Software zur Parametrierung verfügt. Nach der Verbindung kann das IED mittels des PCs parametrisiert und in das bestehende Kommunikationsnetzwerk der Umrichterstation eingebunden werden.

Es ist ferner bekannt einen Einzelplatzrechner (PC), der mit einer Engineering-Software bestückt ist, mit einem Kommunikationsnetzwerk zu verbinden. In dem Kommunikationsnetzwerk befindet sich nur ein einziges IED, das eine werksseitige IP-Adresse (z.B. 169.254.100.1) aufweist. Dieses IED kann so als das zu installierende IED identifiziert werden. Im Anschluss daran wird über die vorläufige IP-Konfiguration die Schutzkonfiguration sowie die endgültige IP-Konfiguration eingespielt.

Gemäß dem Stand der Technik kann die Inbetriebnahme auch mittels eines am IED ausgebildeten Bildschirms und zugehöriger Tastatur erfolgen. Mit anderen Worten verfügt das IED über eine Schnittstelle zwischen Mensch und Maschine. Dies wird im Englischen als Human-Maschine-Interface (HMI) bezeichnet. Mit Hilfe der Tastatur kann die IP-Konfiguration vorgenommen werden. Anschließend wird die Schutzapplikation über das Kommunikationsnetzwerk parametrisiert werden.

Aufgabe der Erfindung ist es, ein Verfahren der eingangs genannten Art vorzuschlagen, mit dem die Inbetriebnahme und Konfiguration eines IEDs vereinfacht wird.

Die Erfindung löst diese Aufgabe durch ein Verfahren, bei dem auf einem Konfigurationsgerät die Struktur eines elektrischen Energieversorgungsnetzes des Umspannwerks in Gestalt eines Single Line Diagramms (SLD) oder in Gestalt einer Liste von Elementen für ein SLD angezeigt wird, wobei die Position des zu installierenden IEDs in dem SLD oder in der Liste mittels eines Platzhalters verdeutlicht wird, durch Interagieren mit dem Platzhalter ein Code-Scanner eingeschaltet wird; ein das zu installierende Gerät eindeutig identifizierender Code mittels des Code-Scanners gescannt wird, woran anschließend das zu installierende IED eine IP-Adresse erhält und in ein Kommunikationsnetz des Umspannwerks eingegliedert wird.

Im Rahmen der Erfindung wird das Ziel, der schnellen und unkomplizierten Inbetriebnahme eines IED durch das Einscannen eines Codes erreicht, der dem zu installiernden IED eindeutig zugeordnet ist. Erfindungsgemäß wird ein Konfigurationsgerät bereitgestellt, das entweder selbst über einen Code-Scanner verfügt. Abweichend hiervon ist es im Rahmen der Erfindung aber auch möglich, dass das Konfigurationsgerät sich mit einem Code-Scanner über eine Kommunikationsleitung in Verbindung setzt. Konfigurationsgerät und Code-Scanner sind dann als zwei getrennte Geräte realisiert. Die Kommunikationsleitung zwischen ihnen kann als kabelgeführte Kommunikationsleitung oder aber kabellos ausgeführt sein. Das Scannen des Codes kann im Rahmen der Erfindung durch einen Anwender des erfindungsgemäßen Verfahrens ausgelöst werden, indem dieser mit einem in SLD dargestellten Platzhalter interagiert. Das Interagieren kann beispielsweise durch Anklicken des Platzhalters erfolgen. Hierdurch wird zum Beispiel der Code-Scanner aktiviert, der dann beispielsweise von Hand über den Code hinwegbewegt wird.

Vorteilhafterweisen verfügt das IED über einen Bildschirm, wobei der Bildschirm den Code anzeigt. Mit Hilfe des Code-Scanners kann dann der vom Bildschirm angezeigte Code eingescannt werden. Als einzuscannender Code eignet sich beispielsweise ein QR-Code. QR-Codes sind dem Fachmann bekannt, so dass an dieser Stelle nicht weiter auf deren Aufbau und Eigenschaften eingegangen werden muss.

Bei einer weiteren Variante der Erfindung ist der Code außen an dem zu installierenden IED angebracht. Diese Variante hat den Vorteil, dass das IED zum Scannen des Codes ausgeschaltet bleiben kann.

Bevorzugt wird dem Konfigurationsgerät durch das Auslesen des Codes die eindeutige MAC-Adresse des IEDs vermittelt. Mit Hilfe der MAC-Adresse kann dem neu installierten IED eine IP-Adresse zugeordnet werden. MAC-Adressen sind dem Fachmann bestens bekannt, so dass an dieser Stelle hierauf nicht genauer eingegangen zu werden braucht.

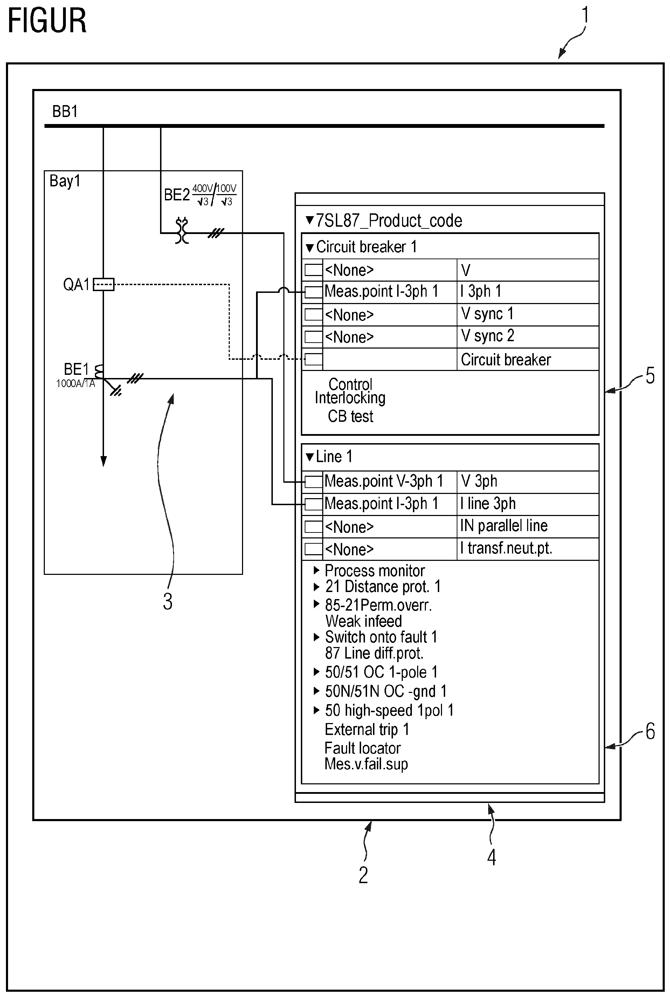

Weitere zweckmäßige Ausgestaltungen und Vorteile der Erfindung sind Gegenstand der nachfolgenden Beschreibung eines Ausführungsbeispiels der Erfindung unter Bezug auf die Figur der Zeichnung, wobei die
- Figur: eine Single Line Diagramm (SLD) eines Umspannwerks verdeutlicht, wobei die Position eines zu installierenden IEDs angezeigt wird.

Die Figur verdeutlicht ein Konfigurationsgerät 1, das im Rahmen des erfindungsgemäßen Verfahrens zum Einsatz gelangt. Das Konfigurationsgerät 1 weist einen Bildschirm 2 auf, auf dem mittels einer auf dem Konfigurationsgerät 1 ablaufender Engineering-Software eine SLD 3 dargestellt ist. Das SLD spiegelt die Struktur eines Energieversorgungsnetzes im Bereich eines Umspannwerks wider. Auf dem Bildschirm 2 ist ferner ein Platzhalter 4 für ein zu installierendes IED erkennbar.

Der Platzhalter 4 bildet verschiedene Felder aus. In der obersten Zeile steht die Bezeichnung 7SL87_Product_code. Diese Buchstaben-Zifferkombination verweist auf ein Schutzgerät.

Darüber hinaus sind zwei Hauptfelder 5, 6 erkennbar. Das obere Hauptfeld bezeichnet den Leistungsschalter (Circuit breaker 1) der mit dem zu installierenden IED verbunden werden soll. Erzeugt das IED ein Fehlersignal, wird der besagte Leistungsschalter in seine Unterbrecherstellung überführt, in der ein Stromfluss über den Leistungsschalter unterbrochen ist.

Das Hauptfeld 6 ist mit "Line 1" überschrieben. Dies entspricht dem Abgang oder der Leitung, welcher das IED oder hier das Schutzgerät angeordnet werden soll. Diese Leitung ist mit 1 bezeichnet.

Des Weiteren sind in den Hauptfeldern in hier nicht näher zu bezeichnenden Unterfeldern Parameter dargestellt, die zum Einstellen des IEDs dienen, so dass das IED das gewünschte Verhalten an den Tag legt. Auf die Bedeutung dieser Parameter braucht jedoch hier nicht weiter eingegangen werden.

Durch das Interagieren mit dem Platzhalter, also beispielsweise durch Anklicken mittels einer nicht dargestellten Maus, kann das Einscannen des Codes des zu installierenden IEDs in Gang gesetzt werden. Dazu wird zunächst ein Code-Scanner, beispielsweise die Kamera eines Mobiltelefons aktiviert. Das Mobiltelefon ist mit dem Konfigurationsgerät verbunden, das seinerseits in ein Kommunikationsnetz des Umspannwerks integriert ist. Der Nutzer kann dann die Kamera des Mobiltelefons über den Code, beispielsweise einen QR-Code führen, so dass auf dem Bildschirm des Konfigurationsgeräts der Code, also die genaue Bezeichnung des IEDs, angezeigt wird. Dem Konfigurationsgerät wird durch das Einlesen des Codes zudem eine eindeutige MAC-Adresse des IEDs vermittelt, wodurch dem neu installierten IED eine IP-Adresse zugeordnet werden kann. Darüber hinaus sendet das Konfigurationsgerät die voreingestellten Parameter an das zu installierende IED. Auf diese Weise ist eine schnelle und einfache Inbetriebnahme des IEDs gegeben. Ein Aufwändiges Anschließen des IEDs an ein Konfigurationsgerät ist erfindungsgemäß vermieden.

Falls der Code auf das IED gedruckt ist, ist zudem der Anschluss des IEDs an eine Stromversorgung unnötig geworden. Weiterhin ist es möglich, diese Variante des Verfahrens auch für IED Feldgeräte ohne Display oder Bedienelemente (HMI) anzuwenden.

Grundsätzlich kann das Interagieren mit dem Platzhalter im Sinne der Erfindung beliebig ausgestaltet werden. So kann das Interagieren beispielsweise auch durch einfaches Berühren des Bildschirms mit dem Finger erfolgen, an der Stelle, die den Platzhalter anzeigt. Bei dieser Variante ist Bildschirm 2 als Touch-Screen ausgeführt.

## Patentansprüche

1. Verfahren zur Inbetriebnahme eines intelligenten elektrischen Geräts (IED) zum Schutz von Komponenten eines Umspannwerks oder zur Automatisierung von Abläufen in dem Umspannwerk, bei dem
- auf einem Konfigurationsgerät (1) die Struktur eines elektrischen Energieversorgungsnetzes des Umspannwerks in Gestalt eines Single Line Diagramms (SLD) (3) oder in Gestalt einer Liste von Elementen für ein SLD (3) angezeigt wird, wobei die Position des zu installierenden IEDs in dem SLD (3) oder in der Liste mittels eines Platzhalters (4) verdeutlicht wird,
- durch Interagieren mit dem Platzhalter (4) ein Code-Scanner eingeschaltet wird;
- ein das zu installierende Gerät eindeutig identifizierender Code mittels des Code-Scanners gescannt wird, woran anschließend das zu installierende IED eine Parametrierung einschließlich einer IP-Adresse erhält und in ein Kommunikationsnetz des Umspannwerks eingegliedert wird.

2. Verfahren nach Anspruch 1, **dadurch gekennzeichnet, dass** der Code ein QR-Code ist.

3. Verfahren nach Anspruch 2, **dadurch gekennzeichnet, dass** das IED einen Bildschirm aufweist, wobei der Bildschirm den QR-Code anzeigt.

4. Verfahren nach einem der vorhergehenden Ansprüche, **dadurch gekennzeichnet, dass** der Code außen an dem zu installierenden IED angebracht ist, so dass der Code optisch von einem externen Code-Scanner erfasst werden kann.

5. Verfahren nach einem der vorhergehenden Ansprüche, **dadurch gekennzeichnet, dass** dem Konfigurationsgerät durch das Auslesen des Codes eine MAC-Adresse des zu installierenden IEDs übermittelt wird.
